(19)

Europäisches
Patentamt
European
Patent Office
Office européen
des brevets

(11) **EP 2 772 883 B1**

(12) **EUROPEAN PATENT SPECIFICATION**

(45) Date of publication and mention
of the grant of the patent:
**10.10.2018 Bulletin 2018/41**

(51) Int Cl.:
*G06T 7/11* *(2017.01)*  *G06T 7/136* *(2017.01)*
*G06T 7/155* *(2017.01)*  *G06T 7/187* *(2017.01)*

(21) Application number: **14155999.7**

(22) Date of filing: **20.02.2014**

(54) **Road-surface height shape estimation method and system**

Straßenoberflächen-Höhenschätzverfahren und -system

Procédé et système d'estimation de forme de hauteur de surface de route

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.02.2013  CN 201310063898**

(43) Date of publication of application:
**03.09.2014  Bulletin 2014/36**

(73) Proprietor: **Ricoh Company, Ltd.
Tokyo 143-8555 (JP)**

(72) Inventors:
 • **Chen, Chao
 Beijing 100044 (CN)**
 • **Shi, Zhongchao
 Beijing 100044 (CN)**
 • **Lu, Yaojie
 Beijing 100044 (CN)**
 • **Wang, Gang
 Beijing 100044 (CN)**

(74) Representative: **White, Duncan Rohan et al
Marks & Clerk LLP
Fletcher House (2nd Floor)
Heatley Road
The Oxford Science Park
Oxford OX4 4GE (GB)**

(56) References cited:
 • **LOMBARDI P ET AL: "Unified stereovision for
 ground, road, and obstacle detection",
 INTELLIGENT VEHICLES SYMPOSIUM, 2005.
 PROCEEDINGS. IEEE LAS VEGAS, NV, USA
 JUNE 6-8, 2005, PISCATAWAY, NJ, USA,IEEE,
 PISCATAWAY, NJ, USA, 6 June 2005
 (2005-06-06), pages 783-788, XP010833892, DOI:
 10.1109/IVS.2005.1505200 ISBN:
 978-0-7803-8961-8**
 • **XIN LI ET AL: "A real-time vehicle detection and
 tracking system in outdoor traffic scenes",
 PATTERN RECOGNITION, 2004. ICPR 2004.
 PROCEEDINGS OF THE 17TH INTERNAT IONAL
 CONFERENCE ON CAMBRIDGE, UK AUG. 23-26,
 2004, PISCATAWAY, NJ, USA,IEEE, LOS
 ALAMITOS, CA, USA, vol. 2, 23 August 2004
 (2004-08-23), pages 761-764, XP010724503, DOI:
 10.1109/ICPR.2004.1334370 ISBN:
 978-0-7695-2128-2**
 • **SERGIO A RODRIGUEZ F ET AL: "Visual
 confirmation of mobile objects tracked by a
 multi-layer lidar", INTELLIGENT
 TRANSPORTATION SYSTEMS (ITSC), 2010 13TH
 INTERNATIONAL IEEE CONFERENCE ON, IEEE,
 PISCATAWAY, NJ, USA, 19 September 2010
 (2010-09-19), pages 849-854, XP031792728, ISBN:
 978-1-4244-7657-2**

EP 2 772 883 B1

**Description**

BACKGROUND OF THE INVENTION

1. Field of the Invention

The present invention generally relates to the field of image processing, and more particularly relates to a technique of estimating a height shape of a road surface (sometimes called a "road-surface height shape" in this specification) on the basis of a stereo vision-based disparity map.

2. Description of the Related Art

With the development of image processing technology, people are never satisfied with a two-dimensional image which is only able to reflect the planar vision of an object. Recently, for example, a three-dimensional technique which is able to reflect the stereo vision of an object has attracted people's attention, and many applications have been developed on the basis of this kind of three-dimensional technique.

In general, when right and left eyes of a human being observe an object, there is a binocular disparity. On the basis of this phenomenon, the theoretical foundation of binocular stereo vision is laid. The binocular stereo vision is vision in which, for example, two cameras (the so-called "two-lens camera") located at different positions are used together to capture a same scene, or one camera is used to capture a same scene in a movable or rotatable manner; then, by adopting various algorithms, pixel matching is carried out so as to calculate disparities of the corresponding pixels and to generate a corresponding disparity map; and then, according to the triangulation measurement principle, the depth (distance) information of the corresponding pixels are recovered. Here it should be noted that since the calculation of the disparities of the corresponding pixels and the generation of the corresponding disparity map are well-known techniques in the art, the descriptions related to them are omitted here.

The range of application of this kind of binocular stereo vision is very wide. For example, this kind of binocular stereo vision may be applied to three-dimensional movies, road detection on the basis of a three-dimension technique, pedestrian detection, automated driving, and the like.

Moreover, with the increase of requirements for vehicle automation, the application of the binocular stereo vision by which a three-dimensional road environment can be reliably detected has become very important for vehicle safety assist and/or self-driving. Specially for an urban road whose environment is more complicated than that of a highway or a country road, this kind of application has become more and more important. As a result, how to more accurately and effectively detect a road itself and its related parameters such as its road-surface height has become an important research topic. If it is possible to accurately obtain the road-related parameters including the road-surface height, then, on the basis of these kinds of parameters, it is possible to carry out, for example, calculation of the real height of a pedestrian, a vehicle, or a building on the corresponding road surface.

Up to now, some solutions have been proposed in the conventional techniques for performing road detection. For example, there are two related references, namely, (i) "A Complete U-V-Disparity Study for Stereovision Based on 3D Driving Environment Analysis" written by Zhencheng Hu, Francisco Lamosa, and Keiichi Uchimura of Kumamoto University, and published at "Proceedings of the 5th International Conference on 3-D Digital Imaging and Modeling" on June 13, 2005, and (ii) U.S. Patent Application Publication No. 2009/0041337 A1 titled "Image Processing Apparatus and Method", invented by Nakano, and published on Feb. 12, 2009 by United States Patent and Trademark Office.

In the above-mentioned reference No. 1, a road scene analysis algorithm based on stereo vision is disclosed. In this method, first, a V-disparity image is created on the basis of an original disparity map, and then, by carrying out a series of processes (calculations) with respect to the whole V-disparity image, it is possible to distinguish among a road surface, a non-road region, an obstacle, etc. However, in general, a road scene is very complicated, for example, and may include a pedestrian, a building, a road, an obstacle, etc. As a result, the amount of calculation carried out with respect to the whole V-disparity image corresponding to the road scene is very large, and this kind of calculation may be easily influenced by the respective objects in the road scene so as to result in a road detection error.

Furthermore, in the above-mentioned reference No. 2, a lane marker detection algorithm based on three-dimensional information is disclosed. However, this algorithm is only suitable to be applied to a road scene including a clear lane marker, for example, a road scene of a highway. That is to say, as for a road on which there isn't a lane marker, or there is a unclear lane marker, for example, a country road, it is impossible to carry out an accurate and effective road detection process by adopting this algorithm.

Therefore, it necessary to develop a solution able to accurately and effectively carry out road-surface height detection and road-surface height shape estimation with respect to various roads.

Lombardi P et al: "Unified stereovision for ground, road, and obstacle detection", Intelligent Vehicles Symposium, 2005. Proceedings. IEEE Las Vegas, NV, USA June 6-8, 2005, Piscataway, NJ, USA, IEEE, Piscataway, NJ, USA 6 June 2005 (2005-06-06), pages 783-788, XP010833892.DOI: 10. 1109/IVS.2005. 1505200. ISBN 978-0-7803-8961-8 discloses a method of estimating a height shape of a road surface in a road scene is provided. This method includes a step of obtaining an original disparity map of the road scene; a step of detecting a road-surface region of interest based on the original disparity map; a step of determining plural road-surface points of interest based on the road-surface region of interest; and a step of estimating the height shape of the road surface in the road scene based on the plural road-surface points of interest.

Xin Li et al: "A real-time vehicle detection and tracking system in outdoor traffic scenes", Pattern Recognition, 2004, ICPR 2004, Proceedings of the 17th International Conference on Cambridge, UK Aug. 23-26, 2004, Piscataway, NJ, USA, IEEE, Los Alamitos, CA, USA, vol. 2, 23 August 2004 (2004-08-23), pages 761-764, XP010724503, DOI: 10.1109/ICPR.2004.1334370. ISBN: 978-0-7695-2128-2 discloses a method which divides a disparity map into a given number of smaller rectangles forming a grid. Plane fitting is carried out using the disparity values in a square to determine if the pixels in the square belong to a road surface or not. If the method decides that a rectangle is part of the road surface, i.e. that the plane fitting error is within a given value range, it is used as a seed for growing a road region using neighboring rectangles. The region growing stops if the method finds a rectangle whose plane fitting error lies outside the value range. The first seed is chosen in the lower rows of the disparity map.

The invention is in the method of claim 1 and the system of claim 6.

As a result, by adopting the above-described method and system, it is possible to deal with complicated road circumstances. Since the above-described method and system are robust to disturbance caused by, for example, a trench along a road or a building near an overpass, it is possible to effectively remove an object much higher or much lower than the corresponding road surface so that the obtained road-surface height shape estimation result is reliable and accurate.

Here it should be noted that in the above-mentioned reference No. 1, a whole V-disparity map is utilized for estimating the height of a road surface. However, in an example useful for understanding the invention, it is possible to first perform the detection of a road-surface region of interest and plural road-surface points of interest, and then conduct the estimation of the height shape of the corresponding road surface, so as to remove an object much higher or much lower than the corresponding road surface. As a result, in this way, it is possible to accurately find a region in which the corresponding road surface probably exists. At the same time, since the number of road-surface points of interest is limited, and because these kinds of road-surface points of interest are utilized for fitting one or more straight lines or a plane so as to acquire the height shape of the corresponding road surface, it is possible to dramatically reduce the amount of the corresponding calculation.

Moreover, since how to accurately find a region in which a road probably exists is very useful for estimating the height shape of the corresponding road surface, by carrying out the detection of a road-surface region of interest according to the above-described method and system, it is possible to perform more accurate road-surface height shape estimation. Furthermore, since the road-surface region of interest is a region whose area is less than that of the corresponding road surface, the detection carried out with respect to the road-surface region of interest is easier than that carried out with respect to the corresponding road surface, thereby being able to dramatically improve the accuracy and the reliability of the corresponding detection as well as to dramatically reduce the amount of the corresponding calculation.

On the other hand, in the above-mentioned reference No. 2, a lane marker is utilized for estimating the height of a road surface. However, in the above-described method and system, it is possible to first conduct the detection of a road-surface region of interest and plural road-surface points of interest, and then perform the estimation of the height shape of the corresponding road surface. In other words, the above-described method and system do not rely on, for example, a lane marker, so that they have strong adaptability when applied to the complicated road circumstances.

In addition, since the height shape information of a road surface estimated (obtained) by utilizing the above-described method and system may be utilized for determining the real height of an actual object from the road surface in the corresponding road scene, the above-described method and system are very convenient for carrying out the detection of a vehicle, a pedestrian, a building, etc.

BRIEF DESCRIPTION OF THE DRAWINGS

FIG. 1 illustrates an exemplary structure of a hardware system for implementing respective embodiments of the present invention;

FIG. 2 is a flowchart of a method of estimating a height shape of a road surface according to a first embodiment of the present invention;

FIG. 3 is a flowchart of a process of detecting a road-surface region of interest on the basis of a disparity map;

FIGS. 4A to 4G illustrate examples of detecting a road-surface region of interest on the basis of a disparity map;

FIG. 5 is a flowchart of a process of determining plural road-surface points of interest on the basis of a road-surface region of interest;

FIG. 6 illustrates examples of post-processing carried out with respect to a road-surface region of interest;

FIG. 7 illustrates an example of generating a V-disparity image by carrying out projection of plural road-surface points of interest;

FIGS. 8A and 8B illustrate a comparison of results obtained by utilizing the whole V-disparity map-based road-surface height shape estimation according to a conventional technique and obtained by utilizing the road-surface height shape estimation method according to the first embodiment of the present invention;

FIG. 9 illustrates a result obtained by conducting piecewise fitting with respect to a road surface in a V-disparity image;

FIG. 10 illustrates plural road-surface points obtained on the basis of a road-surface height shape estimated by utilizing the road-surface height shape estimation method according to the first embodiment of the present invention; and

FIG. 11 illustrates a system for estimating a height shape of a road surface in a road scene according a second embodiment of the present invention.

## DETAILED DESCRIPTION OF THE PREFERRED EMBODIMENTS

Hereinafter, various embodiments of the present invention will be concretely described with reference to the drawings. However, it should be noted that the same symbols, which are in the specification and the drawings, stand for constructional elements having the basically-same function and structure, and repeated explanations for the constructional elements are omitted.

In order to let those people skilled in the art better understand the present invention, hereinafter the present invention will be concretely described on the basis of an order as follows:

1. Introduction of Terms and Concepts
2. Hardware Structure for Implementing Embodiments
3. First Embodiment - Method of Estimating Height Shape of Road Surface

   3-1. Detection of Road-Surface Region of Interest
   3-2. Determination of Road-Surface Points of Interest
   3-3. Estimation of Height Shape of Road Surface
   3-4. Estimation of Real Height of Actual Object

4. Second Embodiment - System for Estimating Height Shape of Road Surface

1. Introduction of Terms and Concepts

(1) Disparity and Disparity Map

A "disparity" (sometimes called a "disparity value" in this specification) actually refers to an angle between two straight lines respectively connecting two ends of a base line and a point far away. In general, when observing a same target from two points having a certain distance, a direction difference is generated. At this time, an angle generated when observing the two points from the target is called a disparity angle, and the distance between the two points is called a base line. As a result, as long as the disparity angle and the length of the base line are given, it is possible to calculate the distance between the target and an observer.

A "disparity map" refers to one whose size is, when an image serves as a base image, the same as the size of the base image and whose element values are disparities. The disparity map includes the distance information of a scene. The disparity map may be obtained by carrying out calculation with respect to a right image and a left image captured by, for example, a two-lens camera or with respect to a depth map obtained from a stereo view. Since there is a certain relationship d(D) between a disparity value d and the depth D of an object, if the disparity value is given, then it is possible to calculate the depth of the object; and vice versa.

(2) V-Disparity Image

It is well-known to those people skilled in the art that in an original disparity map, each pixel represents a point in a three-dimensional (i.e., a U-V-D-dimensional) space (here U refers to a horizontal dimension; V refers to a vertical dimension; and D refers to a depth dimension). After the original disparity map is projected onto a vertical plane (only having the V-dimension and the D-dimension), U-coordinates of all the pixels disappear. This kind of newly-generated image is called a "V-disparity image". That is to say, a V-disparity map may be acquired by carrying out calculation with respect to an original disparity map. In addition, as for each pixel (d, v) in a V-disparity image, its grayscale is the number of pixels whose disparity values are d, wherein, the pixels are on a line whose vertical coordinate is v, and the line is on the corresponding original disparity map.

(3) Binary Image

A binary image refers to an image in which each pixel is black or white. In general, a binary image is employed to describe an outline of an object. Since the binary image is well-known to those people skilled in the art, its description is omitted here.

(4) Morphology Erosion and Morphology Dilation

It is well-known to those people skilled in the art that morphology-based calculation is a kind of binary image processing method developed on the basis of mathematical morphology-based set theory. Basically, mathematical morphology is a theory and technique for the analysis and processing of geometric structures. Recently the mathematical morphology has been widely applied to digital images and machine vision. In binary morphology, an image is viewed as a subset of a Euclidean space or an integer grid. The basic idea in binary morphology is to probe an image with a simple, pre-defined shape, drawing conclusions on how this shape fits or misses the shapes in the image. This simple "probe" is called a "structuring element", and is itself a binary image (i.e., a subset of the space or grid). The morphology-based calculation includes erosion and dilation. If it is assumed that B represents the structuring element, then regarding a binary image A in a Euclidean space $E$, the erosion and dilation are respectively defined as the following.

$$\mathtt{Erosion:} \quad A \ominus B = \{z \in E \,|\, B_z \subseteq A\}$$

$$\mathtt{Dilation:} \quad A \oplus B = \{z \in E \,|\, (B^s)_z \cap A \neq \varnothing\}$$

Here $B_z$ is the translation of $B$ by a vector z, i.e., $B_z = \{b + z \,|\, b \in B\}$, $\forall z \in E$; and $B^s$ denotes the symmetric of $B$, that is, $B^s = \{x \in E \,|\, -x \in B\}$.

In other words, the operation of the morphology erosion is, for example, as follows:
A structuring element B (for example, $3 \times 3$ pixel size) is adopted to scan each pixel z in an image, and then a logical operation using "AND" gate is carried out with respect to each pixel of the structuring element B and the pixel z. If the results of the logical operation using "AND" gate carried out with respect to the respective pixels of the structuring element B and the pixel z are 1, then the value of this pixel z is given 1; otherwise, the value of this pixel z is given 0.

Moreover, the operation of the morphology dilation is, for example, as follows:
A structuring element (for example, $3 \times 3$ pixel size) is adopted to scan each pixel z in an image, and then a logical operation using "AND" gate is carried out with respect to each pixel of the structuring element B and the pixel z. If the results of the logical operation using "AND" gate carried out with respect to the respective pixels of the structuring element B and the pixel z are 0, then the value of this pixel z is given 0; otherwise, the value of this pixel z is given 1.

As a result, generally speaking, the morphology erosion is a kind of process of erasing edge pixels so as to remove a small and meaningless object, and the morphology dilation is a kind of process of, regarding an object, combining background pixels in contact with the object and the pixels of the object so as to fill a hole inside the object.

For more information about the morphology erosion and the morphology dilation, it is possible to see http://en.wikipedia.org/wiki/Morphological image processing and the related references in the art.

(5) Region Growing

It is well-known to those people skilled in the art that the basic thought of region growing is utilizing pixels having a similar characteristic to make up a region. First, it is necessary to find a seed point in a region, and then, pixels in a neighboring region, having a same or similar characteristic are obtained so as to be added to the region at which the seed point is located. After that, the obtained pixels are regarded as new seed points, and the above-described process is repeatedly conducted until it is impossible to find a pixel able to serve as a new seed point.

Here it should be noted that a predetermined threshold value (a criterion) related to a gray level, color, texture, a gradient, etc. may be adopted to determine whether a neighboring pixel is the same as or similar to a seed pixel. There are three key points for achieving the region growing, namely, (i) selection of at least one seed point, (ii) determination of a threshold value, and (iii) a stopping condition of the region growing.

In general, a selected seed point should be a point having representativeness, and may be a single pixel or a sub region including a group of pixels. Furthermore, a criterion used in the region growing is evaluating the similarity of a neighboring pixel and a seed point by adopting the distance between the two. A seed point may change with the growth of the corresponding region, or may be set to a fixed value. A stopping condition of the region growing is very important for determining whether the region growing should be stopped, and usually is decided on the basis of the criterion of the region growing. A threshold value for determining whether the region growing should be stopped may be set to a fixed value, or may change with the growth of the corresponding region.

For more information about the region growing, it is possible to see http://en.wikipedia.org/wiki/Region growing and the related references in the art.

(6) Road-Surface Region of Interest (ROI)

The "road-surface region of interest (ROI)" mentioned in this specification is utilized to find a region of road-surface points of interest. As a result, it is best to find a region including the whole road surface to serve as the road-surface region of interest.

(7) Road-Surface Point of Interest (POI)

The "road-surface points of interest (POI)" mentioned in this specification are usually selected from the above-described road-surface region of interest, and are utilized to carry out plane fitting or straight line fitting so as to obtain a road-surface height shape. It is obvious to those people skilled in the art that how to select road-surface points of interest may dramatically influence the result of the plane fitting or the straight line fitting. As a result, it is best to select as many road-surface points of interest as possible which are located at the actual road surface in a stereo image.

(8) Road-Surface Height Shape

The "road-surface height shape" mentioned in this specification includes a linear function (one or more straight line segments) or a curvilinear function (a two-dimensional concept) of a road-surface height, or a planar function or a surface function (a three-dimensional concept) of the road-surface height. Here it should be noted that in this specification, the values corresponding to the road-surface height shape (i.e., the values of the road-surface heights forming the road-surface height shape) are road-surface height values expressed in pixels of an image, but are not actual road-surface height values expressed in metric units, centimetric units, etc., in an actual scene.

2. Hardware Structure for Implementing Embodiments

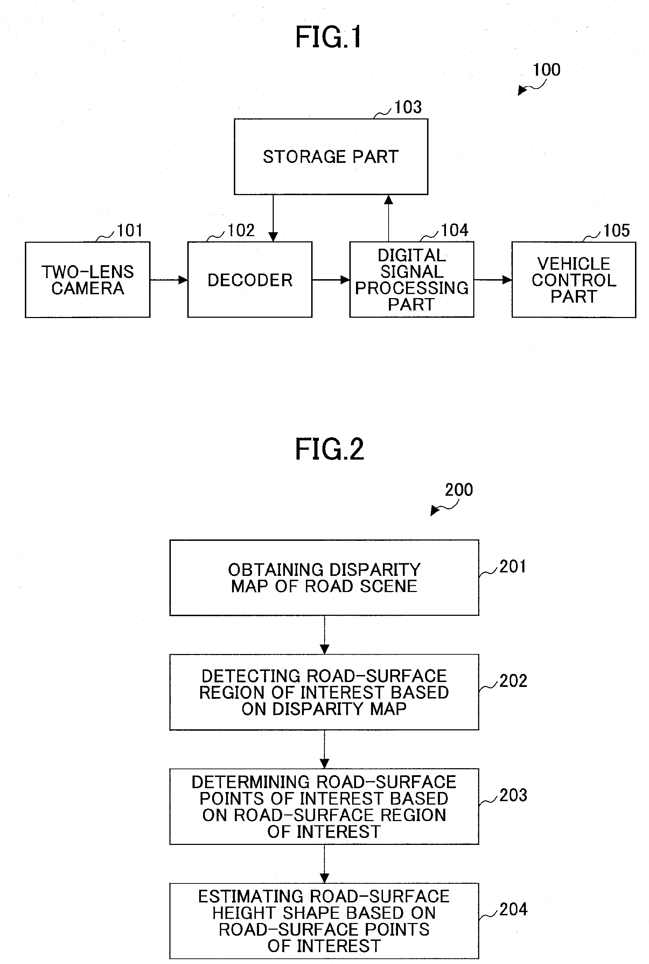

FIG. 1 illustrates an exemplary structure of a hardware system 100 for implementing respective embodiments of the present invention.

As shown in FIG. 1, for example, the hardware system 100 may be installed in a vehicle so as to automatically control the vehicle. As an example, the hardware system 100 may comprise a two-lens camera 101, a decoder 101, a storage part 103, a digital signal processing part 104, and a vehicle control part 105. The base line length of the two-lens camera 101 is b that refers to the distance between the two lenses of the two-lens camera 101. The left lens of the two-lens camera 101 is utilized to capture a left image of a road scene, and the right lens of the two-lens camera 101 is utilized to capture a right image of the same road scene. The two-lens camera outputs the captured right and left images to the decoder 102. The decoder 102 is utilized to convert its received right and left images into a disparity map. The disparity map may be stored in the storage part 103. In this way, the disparity image may be processed by the digital signal processing part 104 at any time so that it is possible to achieve the estimation of a road-surface height shape and other related processes, i.e., it is possible to obtain the results of the estimation of the road-surface height shape and the other related processes. Here it should be noted that the processing conducted in the digital signal processing part 104 will be concretely described below on the basis of FIGS. 1 to 10. The results of the road-surface height shape estimation and the other related processes conducted by the digital signal processing part 104 may be stored in the storage part 103, and may be transmitted to the vehicle control part 105 at the same time for performing, for example, the automatic vehicle control or the pedestrian detection.

Of course, the above-described application example of the hardware system 100 is just for illustrating the present invention. That it to say, the above-described application example of the hardware system 100 is not used to limit the present invention.

3. First Embodiment - Method of Estimating Height Shape of Road Surface

FIG. 2 is a flowchart of a method 200 of estimating a height shape of a road surface in road scene according to a first embodiment of the present invention.

As shown in FIG. 2, the method 200 of estimating the height shape of the road surface in the road scene according to the first embodiment of the present invention comprises a step (S201) of obtaining a disparity map (also called an "original disparity map") of the road scene; a step (S202) of detecting a road-surface region of interest on the basis of the obtained disparity map; a step (S203) of determining plural road-surface points of interest on the basis of the detected road-surface region of interest; and a step (S204) of estimating the height shape of the road surface in the road scene on the basis of the determined plural road-surface points of interest.

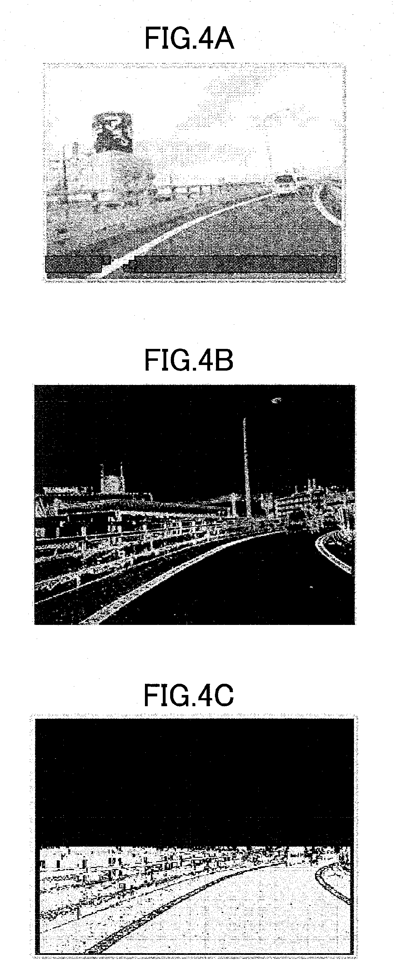

This method 200 may be carried out in the above-described digital signal processing part 104. For example, in STEP S201, the disparity map of the road scene may be obtained by the two-lens camera 101 shown in FIG. 1. An example of this kind of disparity map is shown in FIG. 4B. In general, the road scene may include a road, a building, a pedestrian, an obstacle, etc.

3-1. Detection of Road-Surface Region of Interest

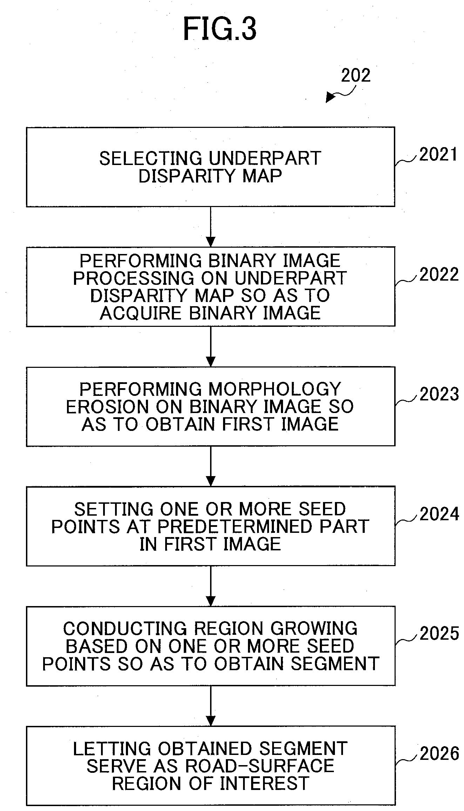

FIG. 3 is a flowchart of the step (S202) of the method 200 shown in FIG. 2, i.e., a flowchart of detecting the road-surface region of interest on the basis of the disparity map.

As shown in FIG. 3, the step (S202) of detecting the road-surface region of interest on the basis of the disparity map includes a step (S2021) of selecting an underpart disparity map from the original disparity map; a step (S2022) of performing binary image processing on the selected underpart disparity map so as to obtain a binary image; a step (S2023) of carrying out the morphology erosion with respect to the obtained binary image so as to acquire a first image; a step (S2024) of setting one or more seed points at a predetermined part in the first image; a step (S2025) of conducting the region growing on the basis of the one or more seed points so as to acquire a segment; and a step (S2026) of letting the acquired segment serve as the road-surface region of interest.

FIGS. 4A to 4G illustrate actual application examples of detecting a road-surface region of interest on the basis of a disparity map.

The purpose of detecting the road-surface region of interest is to seek plural road-surface points of interest. In general, a road surface is located at the underpart (lower part) of a corresponding disparity map as shown in FIG. 4A. As a result, in STEP S2021, an underpart disparity map (for example, the underpart of FIG. 4B) is selected from the original disparity map (for example, FIG. 4B). In this way, it is possible to reduce the calculation amount of the binary image processing, the morphology erosion, the seed point setting, the region growing, etc.

In STEP S2022, by carrying out the binary image processing with respect to the underpart disparity map, it is possible to obtain the binary image as shown in FIG, 4C. That is to say, the binary image processing is only carried out with respect to the underpart of the original disparity map (FIG. 4B).

For example, it is assumed that a threshold value for conducting the binary image processing is Td. If the disparity value of a pixel P(i,j) is less than Td, then the value of this pixel P(i,j) for forming the corresponding binary image is set to a maximum value; otherwise, the value of this pixel P(i,j) for forming the corresponding binary image is set to 0. Here i and j refer to a horizontal coordinate and a vertical coordinate in the corresponding original disparity map, respectively. In this way, it is possible to acquire the corresponding binary image I(x,y) in which x and y refer to a horizontal coordinate and a vertical coordinate in the corresponding binary image, respectively.

The advantage of obtaining the binary image is that it is possible to roughly acquire outlines of some objects including road shoulders and so on. As shown in FIG. 4C, it is obvious that the outlines of road shoulders can be observed. Here it should be noted that the binary image shown in the drawings is drawn as a black-and-gray binary image instead of a black-and-white binary image, so that it is easy to add white characters to the black-and-gray binary image. However, actually, the gray color in the binary image represents the white color whose grayscale is 255.

After that, in STEP S2023, the morphology erosion is carried out with respect to the binary image. As described above, the purpose of conducting the morphology erosion is to erase edge pixels so as to remove a small and meaningless object. In particular, first a structuring element T(i,j) is selected for conducting the morphology erosion. Second the selected structuring element T(i,j) (whose inner pixels are expressed as T (i,j) = { (-1,1), (-1,0), (-1,1), (0,-1), (0,0), (0,1), (1,-1), (1,0), (1,1)}) is utilized to perform the morphology erosion on the binary image I(x,y) obtained in the above step so as to acquire the following first image C(x,y).

$$C(x,y) = (I \ominus T)(x,y) = AND\left[I(x+i, y+j) \& T(i,j)\right]_{i,j=0}^{m}$$

Here it should be noted that since the above equation is well-known to those people skilled in the art, its detailed description is omitted. Moreover, it is also possible to adopt any other proper algorithm able to carry out the morphology erosion so as to acquire the first image.

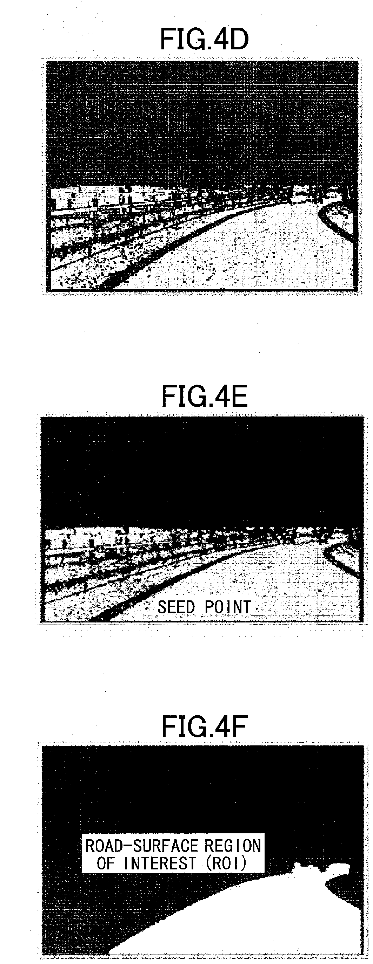

According to FIG. 4D, the boundaries of the road surface (for example, the lane marker and the road shoulder) in the first image obtained by carrying out the above-described morphology erosion become clearer. The reason is that the small white points inside the boundaries of the road surface (for example, the lane marker and the road shoulder) in the binary image shown in FIG. 4C are removed. In this way, it is easy to find the boundaries of the road surface, and it is possible to avoid incorrect region growing due to the small white points inside the boundaries of the road surface.

After that, in STEP S2024, a predetermined part in the first image is selected, and then one or more seed points are set at the predetermined part in the first image. The predetermined part in the first image covers a part of the road surface, but does not exceed the boundaries of the road surface. In general, a road surface is located in front of a vehicle. As a result, when the vehicle is running, a small part near the front of the vehicle has a high probability of being a road surface. On the basis of this, in this embodiment of the present invention, it is possible to select a small part (a triangle or a trapezoid) to serve as the predetermined part for setting one or more seed points. In this way, it is possible to guarantee that the predetermined part is located inside the road surface, but does not exceed the boundaries of the road surface. For example, as shown in FIG. 4E, it is possible to select a small triangle at the underpart to serve as the predetermined part, and then to set one or more seed points inside the predetermined part for carrying out the region growing.

Here it should be noted that how to select and set a seed point may influence the result of the follow-on region growing. In order to be able to cause the result (for example, the shape of a segment) obtained after carrying out the region growing to be as similar as possible to the shape of a road surface, it is necessary to select a seed point from a part of the road surface, and it is also possible to reduce, by selecting more seed points, the uncertainty caused by selecting fewer seed points, so as to improve the accuracy of the region growing.

In STEP S2025, the region growing is conducted on the basis of the selected one or more seed points. As described above, after the one or more seed points are selected, pixels in a neighboring region, having a same or similar characteristic are obtained so as to be added to the region at which the seed points are located. After that, the obtained pixels are regarded as new seed points, and the above-described process is repeatedly conducted until it is impossible to find a pixel able to serve as a new seed point

Here it should be noted that sometimes the boundaries of the road surface are unclear or discontinuous; as a result, in this kind of case, there is a problem that the result of the region growing may extend outside the road surface. As for this kind of case, there are three methods able to solve the problem as follows:

Method 1: Although sometimes a boundary of a road surface is unclear or discontinuous, it is indeed located between a driving area (for example, a road surface) and a non-driving area (for example, a road shoulder or a fence). In general, a driving area and a non-driving area (or called a "road-surface region" and a "non-road-surface region") have different textures, colors, or heights. As a result, on the basis of this, it is possible to properly set a threshold value Td so that the result of the region growing cannot exceed the boundary of the road surface although the boundary is unclear or discontinuous. In this way, it is possible to avoid incorrect region growing.

Method 2: It is possible to adopt a big structuring element T(i, j) (for example, a $5 \times 5$ matrix) for carrying out the morphology erosion with respect to an obtained binary image so as to divide the corresponding road surface into a road-surface region and a non-road-surface region.

Method 3: It is possible to adjust other parameters related to the region growing, for example, it is possible to set a big neighboring window so that the result of the region growing may not exceed the boundaries of the corresponding road surface.

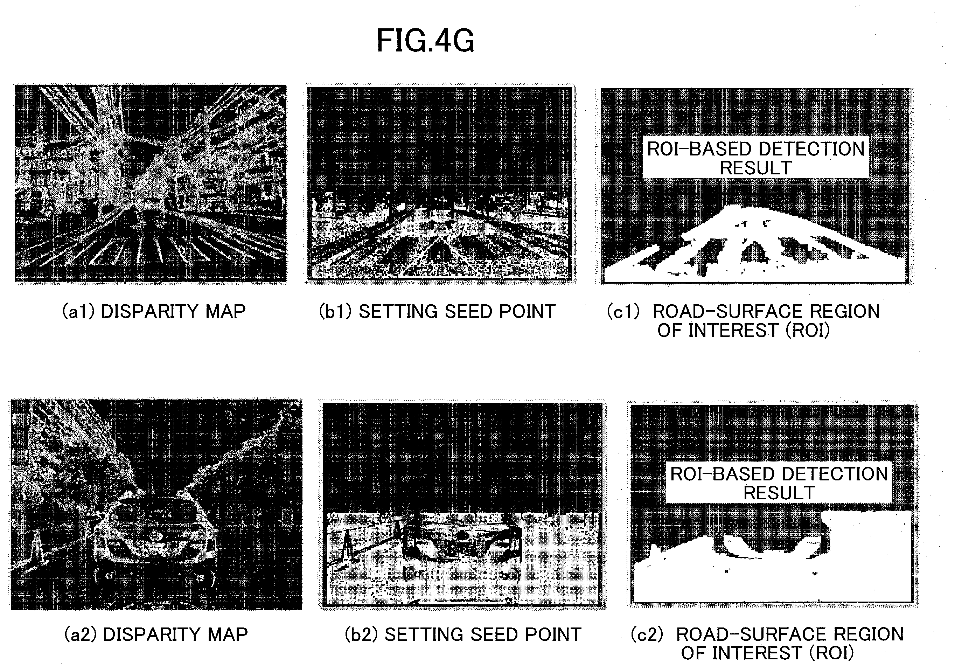

In this way, for example, a road-surface segment (i.e., the result) obtained after carrying out the region growing is as shown in FIG. 4F. Furthermore, FIG. 4G illustrates simulation results of the region growing carried out with respect to different road scenes. Therefore, according to the examples shown in FIGS. 4A to 4G, it is apparent that on the basis of the results of the region growing according to this embodiment of the present invention, it is possible to accurately and reliably find a road-surface segment which is the same as or similar to the actual road surface.

In STEP S2026, the road-surface segment obtained after carrying out the region growing is regarded as the road-surface region of interest, i.e., this road-surface segment serves as the road-surface region of interest for determining the plural road-surface points of interest. Here it should be noted that the obtained road-surface region of interest may not be the whole road surface; that is to say, the area of the obtained road-surface region may be less than or equal to that of the whole road surface. The reason is that in this embodiment of the present invention, only a reliable road-surface region is necessary to carry out the follow-on estimation of the road-surface height shape. In other words, it is not necessary to obtain the whole road surface to carry out the follow-on estimation of the road-surface height shape. In addition, compared with the whole road surface, a road-surface region of interest, whose area is less than or equal to that of the whole road-surface of interest, is more suitable for determining the plural road-face points of interest. In particular, if the area of the road-surface region of interest is less than that of the whole road surface, it is possible to further reduce the amount of the corresponding calculation. In addition, if a small but reliable road-surface region of interest is utilized to perform the follow-on estimation of the road-surface height shape, it is possible acquire a more accurate and reliable result of the follow-on estimation of the road-surface height shape.

3-2. Determination of Road-Surface Points of Interest

In STEP S203, plural road-surface points of interest are determined on the basis of the road-surface region of interest.

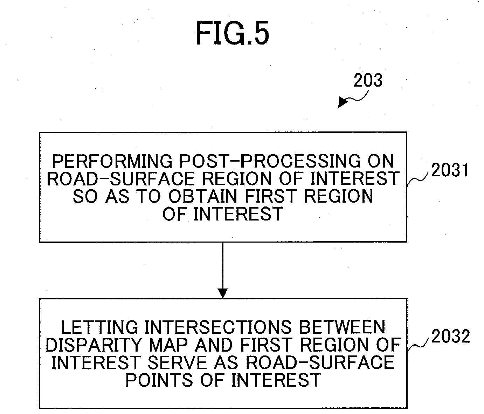

FIG. 5 is a flowchart of STEP S203 for determining the plural road-surface of interest.

As shown in FIG. 5, STEP S203 includes STEP S2031 of carrying out post-processing with respect to the road-surface region of interest so as to obtain a first region of interest; and STEP S2032 of letting the intersections between the original disparity map and the result of the post-processing (i.e., the first region of interest) serve as the plural road-surface points of interest.

In what follows, examples of the post-processing carried out with respect to the road-surface region of interest are concretely described.

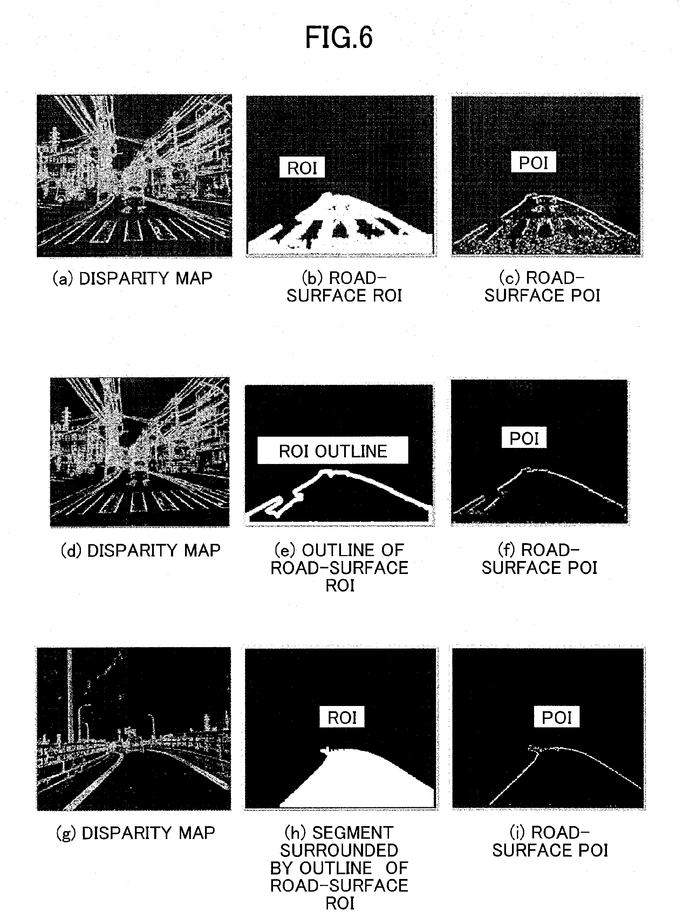

FIG. 6 illustrates three examples of post-processing carried out with respect to the road-surface region of interest.

The post-processing in STEP S2031 may include the following schemes, namely, (i) carrying out the morphology dilation with respect to the road-surface region of interest, and then letting the road-surface region of interest obtained after carrying out the morphology dilation serve as the road-surface region of interest after the post-processing; (ii) extracting the outline of the road-surface of interest, then carrying out the morphology dilation with respect to the extracted outline of the road-surface region of interest, and then letting the outline of the road-surface of interest after the morphology dilation serve as the road-surface region of interest after the post-processing; and (iii) extracting the outline of the road-surface region of interest, then carrying out the morphology dilation with respect the extracted outline of the road-surface region of interest, and then letting the segment surrounded by the outline of the road-surface region of interest after the morphology dilation serve as the road-surface region of interest after the post-processing.

In particular, if the above-described scheme (i) is adopted, then STEP S203 for determining the plural road-surface points of interest selects all the points in the road-surface region of interest to serve as the plural road-surface points of interest, as shown in (a) to (c) of FIG. 6. Alternatively, if the above-described scheme (ii) is adopted, then STEP S203 selects the points on the outline of the road-surface region of interest or the points near the outline of the road-surface region of interest to serve as the plural road-surface point of interest, as shown in (d) to (f) of FIG. 6. Alternatively, if the above-described scheme (iii) is adopted, then STEP S203 selects all the points inside the outline of the road-surface of interest to serve as the plural road-surface points of interest, as shown in (g) to (i) of FIG. 6.

Here it should be noted that each of the above-described schemes has its own characteristic. As a result, it is possible to select an optimal one on the basis of actual circumstances. However, no matter what scheme is selected, the purpose is just to be able to determine those road-surface points of interest which may as well as possible represent the corresponding road-surface height shape. In this way, it is possible to more accurately carry out the follow-on road-surface height shape estimation on the basis of the obtained the road-surface points of interest.

3-3. Estimation of Height Shape of Road Surface

STEP S204 for estimating the road-surface height shape may include the following schemes, namely, (a) on the basis of the plural road-surface points of interest, selecting the lowest points having a same distance D and a same horizontal coordinate X in the original disparity map to serve as candidate road-surface points, and then, on the basis of the candidate road-surface points, carrying out planar fitting so as to acquire the height shape of the road surface (i.e., the road-surface height shape); and (b) generating a V-disparity image by carrying out projection of the plural road-surface points, then selecting the lowest points having a same distance D in the V-disparity image to serve as candidate road-surface points, and then, on the basis of the candidate road-surface points, fitting one or more straight line segments so as to acquire the road-surface height shape.

The above-described scheme (a) may be called a "road-surface planar fitting scheme". It includes the following steps.

In particular, first, it is necessary to select the candidate road-surface points on the basis of the road-surface points of interest. Here it should be noted that in an actual three-dimensional environment, a road surface is located under the other objects in general. As a result, in a road scene image, a road surface should be located at the underpart of the image. That is to say, it is possible to carry out the selection of candidate road-surface points on the basis of height. For example, as for the points having a same horizontal coordinate X and a same distance D (or a same disparity value d), it is possible to choose plural points having a minimum vertical coordinate Y (i.e., the lowest points) to serve as the candidate road-surface points. After this processing, the number of the corresponding points decreases, and those points higher than the corresponding road surface are removed. In this way, it is also possible to increase the probability of the candidate road-surface points being on the corresponding actual road surface.

After that, the planar fitting of the corresponding road surface in a three-dimensional space is carried out by utilizing the selected candidate road-surface points because the corresponding actual road surface is usually a plane in the three-dimensional space. After the planar fitting is carried out, it is possible to acquire various parameters related to the height shape of the corresponding road surface. In other words, it is possible to acquire a kind of function related to the height shape of the corresponding road surface after carrying out the planar fitting; for example, the acquired function may be expressed as h(x, y, D) or h(x, y, d). Here it should be noted that the acquired function indicates the height of a point on the corresponding road surface determined by a horizontal coordinate x, a vertical coordinate y, and a depth D, or a horizontal coordinate x, a vertical coordinate y, and a disparity value d.

Alternatively, the above-described scheme (b) may be called a "road-surface straight line fitting scheme". It includes the following steps.

In particular, before selecting the candidate road-surface points, the V-disparity image is generated by carrying out the projection of the plural road-surface points of interest. In general, in an original disparity map, each pixel refers to a point in the corresponding three-dimensional space (U-dimension, V-dimension, and D-dimension). After all the pixels are projected onto the vertical plane (V-dimension and D-dimension), U coordinates of all the pixels disappear. In this way, it is possible to generate a new image, and this newly-generated image is called a "V-disparity image". Here it should be noted that there is a mapping relationship between the newly-generated image and its corresponding original disparity map. That is to say, the value of each pixel in the V-disparity image is the number of the corresponding pixels along the U-direction in the original disparity map. Here it should be noted that by using the V-disparity map, it is possible to reduce the amount of the corresponding calculation since the number of the corresponding points used for the straight line fitting deceases.

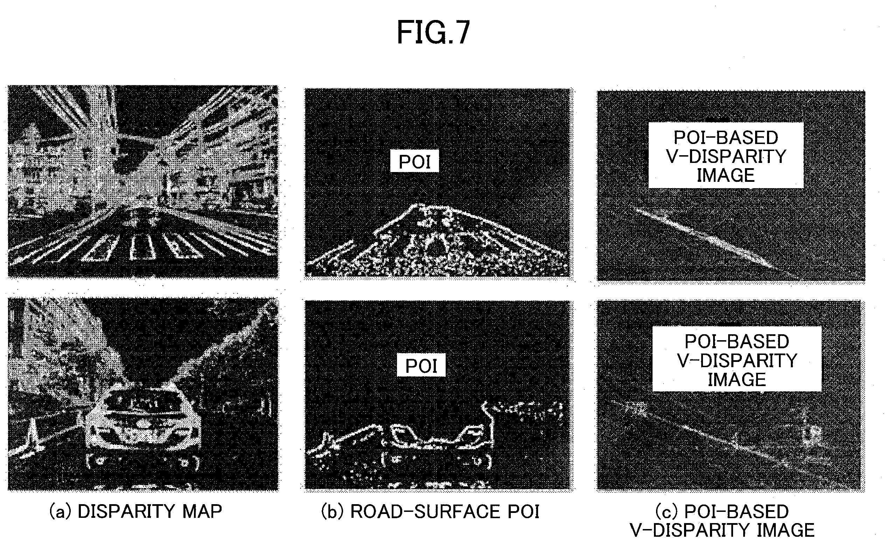

FIG. 7 illustrates an example of generating a V-disparity image by carrying out projection of plural road-surface points of interest. By referring FIG. 7, it is easier to understand the above-described the V-disparity image on the basis of the above-described projection.

Finally, the candidate road-surface points are selected. As describe above, in general, a road surface is located at the underpart of an original disparity map. As a result, after the corresponding V-disparity image is obtained, the corresponding road surface should be still located at the underpart of the corresponding V-disparity image. On the basis of this, it is possible to carry out the height-based selection of the candidate road-surface points. In particular, in the V-disparity image, regarding the pixels having a same disparity value d (or a same depth D), only those pixels having a minimum vertical coordinate Y (i.e., the lowest point) are selected to serve as the candidate road-surface points. According to the actual application example of a V-disparity image on the basis of plural road-surface points of interest as shown in FIG. 7, it is obvious that those points much higher than the corresponding road surface are removed, and the number of the corresponding candidate road-surface points decreases. Therefore, in this way, it is also possible to increase the probability of the candidate road-surface points being on the corresponding road surface.

After that, the selected candidate road-surface points are utilized to carry out the straight line fitting of the corresponding road surface in the V-D-dimensional space (i.e., the V-disparity image), so that it is possible to obtain various parameters related to a road-surface straight line segment. That is to say, it is possible to obtain a kind of function related to the height shape of the corresponding road surface (in this case, the height shape of the corresponding road surface is a straight line segment); for example, the obtained function may be expressed as h(D) or h(d). Here it should be noted that the obtained function indicates the height of a point on the corresponding road surface determined by a depth D or a disparity value d in the corresponding V-disparity image. Of course, sometimes the corresponding road surface is not very straight; as a result, in this kind of case, it is necessary to carry out the piecewise fitting so as to acquire various parameters related to plural straight line segments.

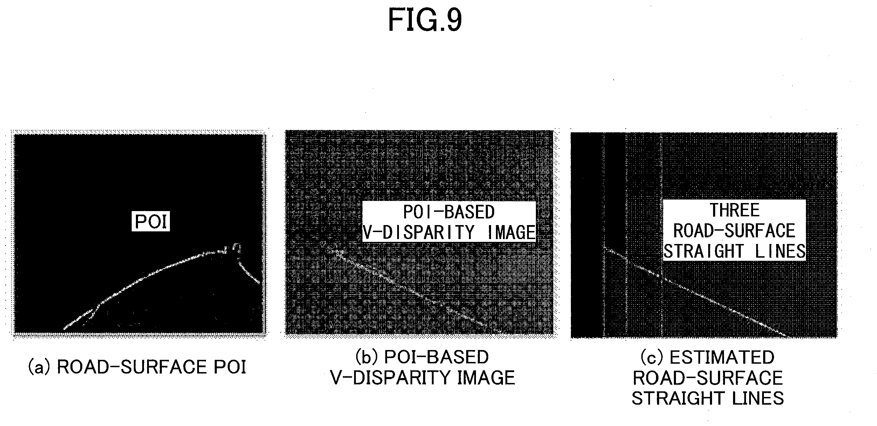

Here it should be noted that it is possible to adopt any proper straight line fitting algorithm such as the least squares method, the Hough transform method, and so on. In addition, in general, in the real world, a road surface is usually uneven; for example, the corresponding road may be an uphill one or a downhill one. As a result, it is also possible to adopt a piecewise linear model to describe the outline of a road surface, and to serve as the height shape of the road surface. In each straight line segment, it is still possible to use a conventional straight line fitting method to acquire the straight line-related parameters. Here it should be noted that in this embodiment of the present invention, the piecewise linear model and the Hough transform method are adopted to carry out the straight line fitting, and the acquired result is as shown in FIG. 9. FIG. 9 illustrates a result obtained by conducting the piecewise fitting of a road surface in a V-disparity image.

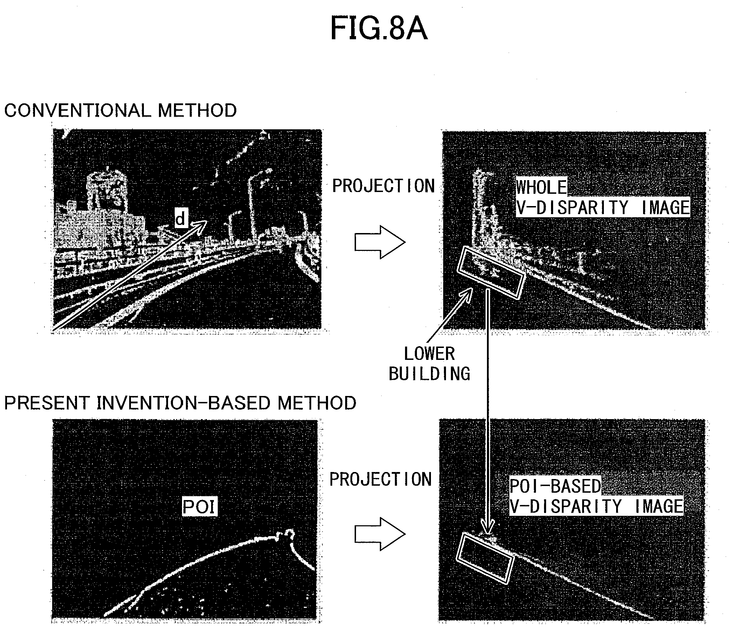

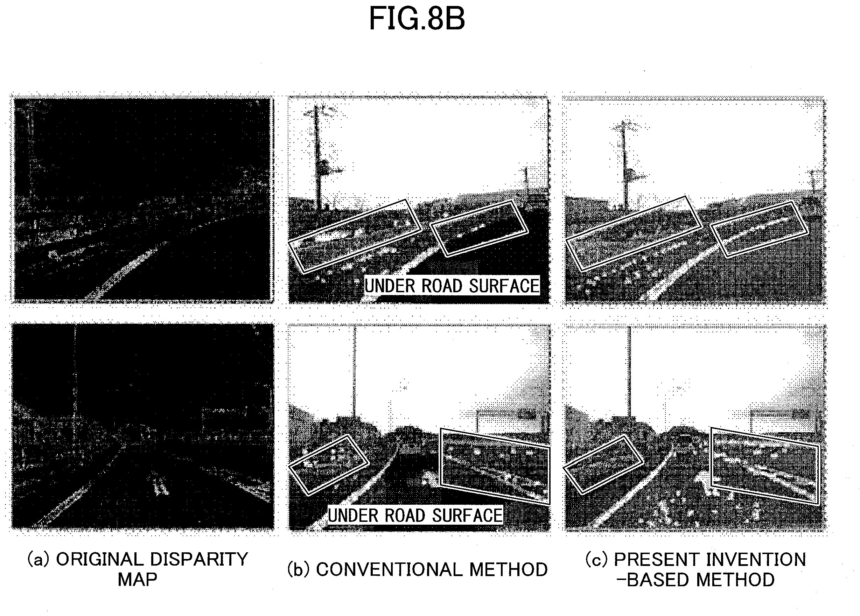

FIGS. 8A and 8B illustrate a comparison of results obtained on the basis of the whole V-disparity image-based road-surface height shape estimation according to a conventional technique and obtained on the basis of road-surface height shape estimation according to the first embodiment of the present invention.

In this embodiment of the present invention, the road-surface region of interest and the plural road-surface points are utilized to obtain the V-disparity image and to carry out the straight line fitting. As shown in FIGS. 8A and 8B, compared to the road-surface detection carried out by utilizing the whole V-disparity image in the conventional technique, by utilizing the road-surface height shape estimation according to this embodiment of the present invention, it is possible to remove the influence caused by those points higher or lower than the actual road surface. In this way, it is possible to more accurately carry out the road-surface height shape detection and estimation. In addition, the road-surface height shape detection and estimation does not rely on, for example, a lane marker, and it is also possible to reduce the amount of calculation.

3-4. Estimation of Real Height of Actual Object

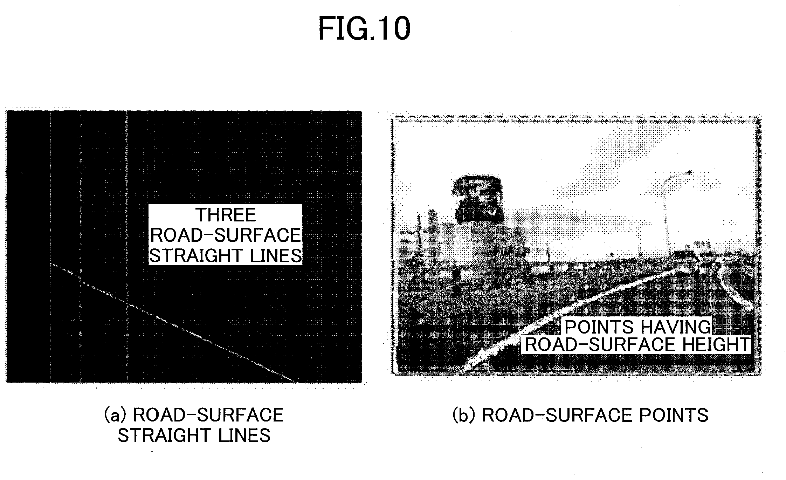

FIG. 10 illustrates plural road-surface points obtained on the basis of a height shape of a road surface estimated according to the first embodiment of the present invention.

That is to say, each of the road-surface points shown in FIG. 10 has a road-surface height. After the road-surface height shape shown in FIG. 10 is acquired, on the basis of the acquired road-surface height shape (for example, $h(x, y, d)$ or $h(d)$), it is possible to estimate the real height of an actual object in a road scene.

In what follows, a road-surface height shape $h(d)$ acquired by adopting the Hough transform method is taken as an example for illustrating how to estimate the real height of an actual object on a corresponding road surface.

First, regarding a particular distance D' of the actual object, it is possible to obtain, on the basis of the estimated road-surface height shape $h(d)$, a road-surface height $h(d)$ corresponding to the particular distance D'. Here d refers to a disparity value corresponding to the particular distance D'.

$$h(d) = \frac{\rho - d \cdot \cos(\theta)}{\sin(\theta)}$$

Here $h(d)$ refers to the road-surface height; d refers to the disparity value corresponding to the particular D'; and $\rho$ and $\theta$ are parameters related to the road-surface height shape obtained by utilizing the Hough transform method. Moreover, it should be noted that the road-surface height $h(d)$ mentioned here does not indicate the actual road-surface height, but indicates a height expressed by pixels of an image.

After that, on the basis of the following equation, it is possible to acquire the real height of the actual object $h_s(D')$.

$$h_s(D') = (y - h(d)) \frac{b}{d - v}$$

Here b refers to a base line length of a two-lens camera for obtaining a disparity map; v refers to a predetermined offset value related to the two-lens camera; and y refers to a vertical coordinate of a pixel having a disparity value d. Moreover, it should be noted that b and v are fixed parameters related to the two-lens camera, and the unit of the actual height $h_s(D')$ may be meter or centimeter.

In this way, by accurately and effectively detecting the road surface and estimating the road-face height shape, it is possible to utilize the acquired road-surface height shape to carry out various applications including but not limited to the real height estimation of an actual object in a road scene, for example, the real height estimation of a pedestrian, a vehicle, or a building. Moreover, the obtained results may be further applied to the pedestrian detection, the vehicle detection, the vehicle automatic control, etc.

As a result, by adopting the method of estimating a height shape of a road surface in a road scene according to the first embodiment of the present invention, it is possible to deal with complicated road circumstances. Since this method is robust to disturbance caused by, for example, a trench along a road or a building near an overpass, it is possible to effectively remove an object much higher or much lower than the corresponding road surface so that the road-surface height shape estimation result is reliable and accurate.

Here it should be noted that in the conventional technique (for example, in the above-mentioned reference No. 1), a whole V-disparity map is utilized for estimating the height shape of a road surface. However, in the above-described method, it is possible to first perform the detection of a road-surface region of interest and plural road-surface points of interest, and then conduct the estimation of the height shape of the corresponding road surface, so as to remove an object much higher or much lower than the corresponding road surface. As a result, in this way, it is possible to accurately find a region in which the corresponding road surface probably exists. At the same time, since the number of road-surface points of interest is limited, and because these kinds of road-surface points are utilized for fitting one or more straight lines or a plane so as to acquire the height shape of the corresponding road surface, it is possible to dramatically reduce the amount of the corresponding calculation.

Moreover, since how to accurately find a region in which a road probably exists is very useful for estimating the height shape of the corresponding road surface, by carrying out the detection of a road-surface region of interest according to the above-described method, it is possible to perform more accurate road-surface height shape estimation.

Furthermore, since the road-surface region of interest is a region whose area is less than that of the corresponding road surface, the detection carried out with respect to the road-surface region of interest is easier than that carried out with respect to the corresponding road surface, thereby being able to dramatically improve the accuracy and reliability of the corresponding detection as well as to dramatically reduce the amount of the corresponding calculation.

On the other hand, in the conventional technique (for example, in the above-mentioned reference No. 2), a lane marker is utilized for estimating the height shape of a road surface. However, in the above-described method, it is possible to first conduct the detection of a road-surface region of interest and plural road-surface points of interest, and then perform the estimation of the height shape of the corresponding road surface. In other words, the above-described method does not rely on, for example, a lane marker, so that is has strong adaptability when applied to the complicated road circumstances.

4. Second Embodiment - System for Estimating Height Shape of Road Surface

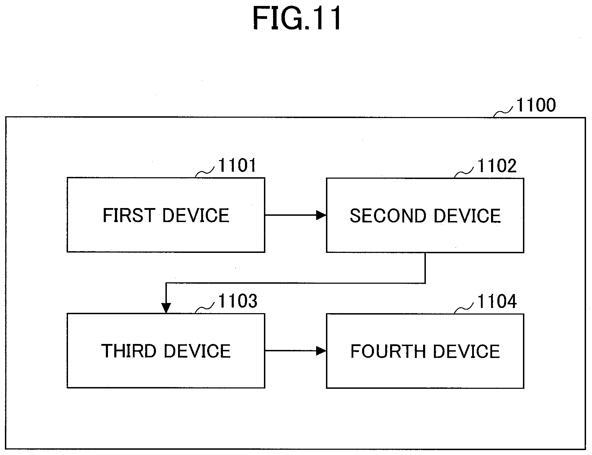

FIG. 11 illustrates a system 1100 for estimating a height shape of a road surface in a road scene according a second embodiment of the present invention.

As shown in FIG. 11, the system 1100 includes a first device 1101 configured to obtain an original disparity map of the road scene; a second device 1102 configured to detect a road-surface region of interest on the basis of the original disparity map; a third device 1103 configured to determine plural road-surface points of interest on the basis of the road-surface region of interest; and a fourth device 1104 configured to estimating the height shape of the road surface in the road scene on the basis of the plural road-surface points of interest.

Of course, the system 1100 may further include other devices for achieving the method and its steps illustrated on the basis of FIG. 1 to 10 according to the first embodiment of the present invention. Here it should be noted that since these kinds of devices are easily achieved by those people skilled in the art by referring to the method according to the first embodiment of the present invention, the related descriptions are omitted here.

As a result, by adopting the system for estimating a height shape of a road surface in a road scene according to the second embodiment of the present invention, it is possible to deal with complicated road circumstances. Since this system is robust to disturbance caused by, for example, a trench along a road or a building near an overpass, it is possible to effectively remove an object much higher or much lower than a road surface so that the road-surface height shape estimation result is reliable and accurate.

Here it should be noted that in the conventional technique (for example, in the above-mentioned reference No. 1), a whole V-disparity map is utilized for estimating the height shape of a road surface. However, in the above-described system, it is possible to first perform the detection of a road-surface region of interest and plural road-surface points of interest, and then conduct the estimation of the height shape of the corresponding road surface, so as to remove an object much higher or much lower than the corresponding road surface. As a result, in this way, it is possible to accurately find a region in which the corresponding road surface probably exists. At the same time, since the number of road-surface points of interest is limited, and because these kinds of road-surface points are utilized for fitting one or more straight lines or a plane so as to acquire the height shape of the corresponding road surface, it is possible to dramatically reduce the amount of the corresponding calculation.

Moreover, since how to accurately find a region in which a road probably exists is very useful for estimating the height shape of the corresponding road surface, by carrying out the detection of a road-surface region of interest according to the above-described system, it is possible to perform more accurate road-surface height shape estimation. Furthermore, since the road-surface region of interest is a region whose area is less than that of the corresponding road surface, the detection carried out with respect to the road-surface region of interest is easier than that carried out with respect to the corresponding road surface, thereby being able to dramatically improve the accuracy and reliability of the corresponding detection as well as to dramatically reduce the amount of the corresponding calculation.

On the other hand, in the conventional technique (for example, in the above-mentioned reference No. 2), a lane marker is utilized for estimating the height shape of a road surface. However, in the above-described system, it is possible to first conduct the detection of a road-surface region of interest and road-surface points of interest, and then perform the estimation of the height shape of the corresponding road surface. In other words, the above-described system does not rely on, for example, a lane marker, so that it has strong adaptability when applied to complicated road circumstances.

Here it should be noted that the above respective embodiments are just exemplary ones, and the specific structure and operation of each of them may not be used for limiting the present invention.

Moreover, the embodiments of the present invention may be implemented in any convenient form, for example, using dedicated hardware, or a mixture of dedicated hardware and software. The embodiments of the present invention may be implemented as computer software implemented by one or more networked processing apparatuses. The network may comprise any conventional terrestrial or wireless communications network, such as the Internet. The processing apparatuses may comprise any suitably programmed apparatuses such as a general purpose computer, personal digital assistant, mobile telephone (such as a WAP or 3G-compliant phone) and so on. Since the embodiments of the present invention can be implemented as software, each and every aspect of the present invention thus encompasses computer software implementable on a programmable device.

The computer software may be provided to the programmable device using any storage medium for storing processor-readable code such as a floppy disk, a hard disk, a CD ROM, a magnetic tape device or a solid state memory device.

The hardware platform includes any desired hardware resources including, for example, a central processing unit (CPU), a random access memory (RAM), and a hard disk drive (HDD). The CPU may include processors of any desired type and number. The RAM may include any desired volatile or nonvolatile memory. The HDD may include any desired nonvolatile memory capable of storing a large amount of data. The hardware resources may further include an input device, an output device, and a network device in accordance with the type of the apparatus. The HDD may be provided external to the apparatus as long as the HDD is accessible from the apparatus. In this case, the CPU, for example, the cache memory of the CPU, and the RAM may operate as a physical memory or a primary memory of the apparatus, while the HDD may operate as a secondary memory of the apparatus.

While the present invention is described with reference to the specific embodiments chosen for purpose of illustration, it should be apparent that the present invention is not limited to these embodiments, but numerous modifications could be made thereto by those people skilled in the art without departing from the basic concept and technical scope of the present invention as claimed.

**Claims**

1. A computer-implemented method (200) of estimating a height shape of a road surface in a road scene, as a mathematical function of the road-surface height, where height values are expressed in pixels, comprising:

   a step(201) of obtaining an original disparity map of the road scene;
   a step(202) of detecting a road-surface region of interest based on the original disparity map;
   a step(203) of determining plural road-surface points of interest based on the road-surface region of interest; and
   a step(204) of estimating the height shape of the road surface in the road scene based on the plural road-surface points of interest;

   wherein the step(202) of detecting the road-surface region of interest comprises:

   a step(2021) of selecting an underpart disparity map from the original disparity map;
   a step(2022) of carrying out binary image processing with respect to the underpart disparity map so as to acquire a binary image, by comparing the disparity value at a pixel of the disparity map to a threshold and by setting the value to 0 or 1 depending on the disparity value being respectively above or below the threshold;
   a step(2023) of performing morphology erosion on the binary image so as to acquire a first image;
   a step(2024) of setting one or more seed points at a predetermined part in the first image, the predetermined part covering a part of the road surface, but not exceeding the boundaries of the road surface;
   a step(2025) of conducting region growing based on the one or more set seed points so as to acquire a segment, by obtaining and adding pixels in a neighboring region, that have a same or similar characteristic, to the region at which the seed points are located, and then repeating the process of adding pixels to the regions of the obtained pixels by treating them as new seed points, until no pixels may be found to serve as new seed points; and
   a step (2026) of letting the segment serve as the road-surface region of interest;
   and wherein the step (203) of determining the plural road-surface points of interest comprises:

   a step (2031) of carrying out post-processing with respect to the road-surface region of interest so as to acquire a first region of interest; and
   a step (2032) of letting intersections of the original disparity map and the first region of interest serve as the plural road-surface points of interest.

2. The method according to claim 1, wherein:
   the predetermined part is located at a lower part of the first image.

3. The method according to claim 1 or claim 2, wherein, the post-processing step (2031) comprises:

   carrying out morphology dilation with respect to the road-surface region of interest so as to let the road-surface region of interest after the morphology dilation serve as the first region of interest;
or extracting an outline of the road-surface region of interest and carrying out morphology dilation with respect to the outline so as to let the outline after the morphology dilation serve as the first region of interest; or extracting an outline of the road-surface region of interest and carrying out morphology dilation with respect to the outline so as to let a segment surrounded by the outline after the morphology dilation serve as the first region of interest.

4. The method according to any one of claims 1 to 3, wherein, the step (204) of estimating the height shape of the road surface in the road scene comprises:

a step of selecting, based on the plural road-surface points of interest, lowest points, having a minimum vertical coordinate Y, having a same distance D and a same horizontal coordinate X in the original disparity map to serve as candidate road-surface points, and then carrying out planar fitting based on the candidate road-surface points so as to acquire the height shape of the road surface in the road scene; or
a step of generating a V-disparity image by carrying out projection of the plural road-surface points of interest, then selecting lowest points, having a minimum vertical coordinate Y, having a same distance D in the V-disparity image to serve as candidate road-surface points, and then carrying out straight line fitting based on the candidate road-surface points so as to acquire the height shape of the road surface in the road scene.

5. The method according to any one of claims 1 to 4, further comprising:
a step of estimating a real height of an actual object in the road scene based on the height shape of the road surface in the road scene, comprising:

a step of, regarding a distance D' related to the actual object, obtaining, based on the height shape of the road surface in the road scene, a road-surface height h(d) corresponding to the distance D', wherein, d refers to a disparity value corresponding to the distance D'; and
a step of obtaining the real height of the actual object $h_s(D')$ according to

$$h_s(D') = (y - h(d))\frac{b}{d - v},$$

wherein b refers to a base line length of a two-lens camera for obtaining the original disparity map; v refers to a predetermined offset value related to the two-lens camera; and y refers to a vertical coordinate of a pixel having the disparity value d.

6. A system (104) configured to perform the method of any one of claims 1 to 5.

**Patentansprüche**

1. Computerimplementiertes Verfahren (200) zum Schätzen einer Höhenform einer Straßenoberfläche in einem Straßenbild als eine mathematische Funktion der Straßenoberflächenhöhe, wo Höhenwerte als Pixel ausgedrückt werden, Folgendes umfassend:

einen Schritt (201) des Ermittelns einer ursprünglichen Disparitätskarte des Straßenbildes;
einen Schritt (202) des Erkennens eines Straßenoberflächenbereichs von Interesse auf der Basis der ursprünglichen Disparitätskarte;
einen Schritt (203) des Bestimmens von mehreren Straßenoberflächenpunkten von Interesse auf dem Straßenoberflächenbereich von Interesse basierend; und
einen Schritt (204) des Schätzens der Höhenform der Straßenoberfläche im Straßenbild auf der Basis der mehreren Straßenoberflächenpunkte von Interesse;
worin der Schritt (202) des Erkennens des Straßenoberflächenbereichs von Interesse Folgendes umfasst:

einen Schritt (2021) des Auswählens einer Unterboden-Disparitätskarte aus der ursprünglichen Disparitätskarte;
einen Schritt (2022) des Ausführens von binärer Bildverarbeitung mit Bezug auf die Unterboden-Disparitätskarte, um ein binäres Bild zu erfassen durch Vergleichen des Disparitätswerts an einem Pixel der Disparitätskarte mit einem Schwellenwert und durch Setzen des Werts auf 0 oder 1, in Abhängigkeit davon, ob der Disparitätswert über bzw. unter dem Schwellenwert liegt;

einen Schritt (2023) des Ausführens von Morphologie-Erosion an dem binären Bild, um ein erstes Bild zu erfassen;

einen Schritt (2024) des Einstellens von einem oder mehreren Seed-Punkten an einem vorgegebenen Teil im ersten Bild, wobei der vorgegebene Teil einen Teil der Straßenoberfläche bedeckt, aber die Grenzen der Straßenoberfläche nicht übersteigt;

einen Schritt (2025) des Ausführens des Vergrößerns des Bereichs auf der Basis des einen oder der mehreren gesetzten Seed-Punkte, um ein Segment zu erfassen, indem Pixel mit einer selben oder einer ähnlichen Charakteristik in einem benachbarten Bereich erhalten und dem Bereich hinzugefügt werden, an dem die Seed-Punkte angeordnet sind, und dann das Wiederholen des Prozesses des Addierens von Pixeln an die Bereiche der erhaltenen Pixel, indem sie als neue Seed-Punkte behandelt werden, bis keine Pixel mehr gefunden werden können, um als neue Seed-Punkte zu dienen; und

einen Schritt (2026), das Segment als den Straßenoberflächenbereich von Interesse dienen zu lassen; und worin der Schritt (203) des Bestimmens der mehreren Straßenoberflächenpunkte von Interesse Folgendes umfasst:

einen Schritt (2031) des Ausführens von Nachverarbeiten mit Bezug auf den Straßenoberflächenbereich von Interesse, um einen ersten Bereich von Interesse zu erfassen; und

einen Schritt (2032), um Durchschnittsmengen der ursprünglichen Disparitätskarte und des ersten Bereichs von Interesse als die mehreren Straßenoberflächenpunkte von Interesse dienen zu lassen.

2. Verfahren nach Anspruch 1, worin:
der vorgegebene Teil an einen unteren Teil des ersten Bildes angeordnet ist.

3. Verfahren nach Anspruch 1 oder Anspruch 2, worin der Nachverarbeitungsschritt (2031) Folgendes umfasst:

Ausführen von Morphologie-Dilatation mit Bezug auf den Straßenoberflächenbereich von Interesse, um den Straßenoberflächenbereich von Interesse nach der Morphologie-Dilatation als den ersten Bereich von Interesse dienen zu lassen;

oder Extrahieren eines Umrisses des Straßenoberflächenbereichs von Interesse und Ausführen von Morphologie-Dilatation mit Bezug auf den Umriss, um den Umriss nach der Morphologie-Dilatation als den ersten Bereich von Interesse dienen zu lassen; oder

Extrahieren eines Umrisses des Straßenoberflächenbereichs von Interesse und Ausführen von Morphologie-Dilatation mit Bezug auf den Umriss, um ein Segment, das nach der Morphologie-Dilatation vom Umriss umgeben ist, als ersten Bereich von Interesse dienen zu lassen.

4. Verfahren nach einem der Ansprüche 1 bis 3, worin der Schritt (204) des Schätzens der Höhenform der Straßenoberfläche im Straßenbild Folgendes umfasst:

auf den mehreren Straßenoberflächenpunkten von Interesse basierend, einen Schritt des Auswählens von niedrigsten Punkten mit einer minimalen vertikalen Koordinate Y, mit einer selben Entfernung D und einer selben horizontalen Koordinate X in der ursprünglichen Disparitätskarte, um als Kandidat-Straßenoberflächenpunkte zu dienen, und dann Ausführen von planarem Fitting auf der Basis der Kandidat-Straßenoberflächenpunkte, um die Höhenform der Straßenoberfläche im Straßenbild zu erfassen; oder

einen Schritt des Erzeugens eines V-Disparitätsbildes durch Ausführen von Projektion der mehreren Straßenoberflächenpunkte von Interesse, dann Auswählen von niedrigsten Punkten mit einer minimalen vertikalen Koordinate Y, die eine selbe Entfernung D im V-Disparitätsbild hat, um als Kandidat-Straßenoberflächenpunkte zu dienen, und dann Ausführen von linearem Fitting auf der Basis der Kandidat-Straßenoberflächenpunkte, um die Höhenform der Straßenoberfläche im Straßenbild zu erfassen.

5. Verfahren nach einem der Ansprüche 1 bis 4, außerdem Folgendes umfassend:
einen Schritt des Schätzens einer wirklichen Höhe eines tatsächlichen Objekts im Straßenbild auf der Basis der Höhenform der Straßenoberfläche im Straßenbild, Folgendes umfassend:

mit Bezug auf eine Entfernung D' die das tatsächliche Objekt betrifft, einen Schritt des auf der Basis der Höhenform der Straßenoberfläche im Straßenbild basierenden Ermittelns einer Straßenoberflächenhöhe h(d), die der Entfernung D' entspricht, worin d einen Disparitätswert betrifft, der der Entfernung D' entspricht; und

einen Schritt des Ermittelns der wahren Höhe des tatsächlichen Objekts $h_s(D')$ gemäß

$$h_s(D') = (y - h(d))\frac{b}{d-v} \, ,$$

wo b eine Basislinienlänge einer Zwei-Linsen-Kamera betrifft, um die ursprüngliche Disparitätskarte zu erhalten; v betrifft einen vorgegebenen Offset-Wert, der die Zwei-Linsen-Kamera betrifft; und y betrifft eine vertikale Koordinate eines Pixels mit dem Disparitätswert d.

6. System (104), konfiguriert zum Ausführen des Verfahrens nach einem der Ansprüche 1 bis 5.

**Revendications**

1. Procédé mis en oeuvre par ordinateur (200) d'estimation d'une forme de hauteur d'une surface de route dans une scène routière, en tant que fonction mathématique de la hauteur de surface de route, où des valeurs de hauteur sont exprimées en pixels, comprenant :

une étape (201) d'obtention d'une carte de disparités originales de la scène routière ;
une étape (202) de détection d'une région d'intérêt de surface de route sur la base de la carte de disparités originales ;
une étape (203) de détermination de plusieurs points d'intérêt de surface de route sur la base de la région d'intérêt de surface de route ; et
une étape (204) d'estimation de la forme de hauteur de la surface de route dans la scène routière sur la base des plusieurs points d'intérêt de surface de route ;
dans lequel l'étape (202) de détection de la région d'intérêt de surface de route comprend :

une étape (2021) de sélection d'une carte de disparités de partie plus basse à partir de la carte de disparités originales ;
une étape (2022) de mise en oeuvre d'un traitement d'image binaire en relation avec la carte de disparités de partie plus basse de manière à acquérir une image binaire, en comparant la valeur de disparité au niveau d'un pixel de la carte de disparités à un seuil et en établissant la valeur à 0 ou 1 en fonction de si la valeur de disparité se situe respectivement au-delà ou en deçà du seuil ;
une étape (2023) de réalisation d'une érosion de morphologie sur l'image binaire de manière à acquérir une première image ;
une étape (2024) de définition d'un ou de plusieurs point(s)-graine(s) au niveau d'une partie prédéterminée dans la première image, la partie prédéterminée couvrant une partie de la surface de route, mais n'excédant pas les limites de la surface de route ;
une étape (2025) de mise en oeuvre d'une croissance de région sur la base des un ou plusieurs point(s)-graine(s) défini(s) de manière à acquérir un segment, en obtenant et en ajoutant des pixels dans une région voisine, qui présentent une même caractéristique ou une caractéristique similaire, à la région au niveau de laquelle les points-graines sont situés puis en répétant le processus d'ajout de pixels aux régions des pixels obtenus en les traitant en tant que nouveaux points-graines jusqu'à ce qu'aucun pixel ne puisse être trouvé pour jouer le rôle de nouveaux points-graines ; et
une étape (2026) consistant à laisser servir le segment comme région d'intérêt de surface de route ;
et dans lequel l'étape (203) de détermination des plusieurs points d'intérêt de surface de route comprend :

une étape (2031) de mise en oeuvre d'un post-traitement en relation avec la région d'intérêt de surface de route de manière à acquérir une première région d'intérêt ; et
une étape (2032) consistant à laisser servir des intersections de la carte de disparités originales et de la première région d'intérêt comme plusieurs points d'intérêt de surface de route.

2. Procédé selon la revendication 1, dans lequel :

la partie prédéterminée est située au niveau d'une partie plus basse de la première image.

3. Procédé selon la revendication 1 ou la revendication 2, dans lequel l'étape de post-traitement (2031) comprend :

la mise en oeuvre d'une dilatation de morphologie en relation avec la région d'intérêt de surface de route de manière à laisser servir la région d'intérêt de surface de route après la dilatation de morphologie comme première région d'intérêt ;

ou l'extraction d'un contour de la région d'intérêt de surface de route et la mise en oeuvre d'une dilatation de morphologie en relation avec le contour de manière à laisser servir le contour après la dilatation de morphologie comme première région d'intérêt ; ou

l'extraction d'un contour de la région d'intérêt de surface de route et la mise en oeuvre d'une dilatation de morphologie en relation avec le contour de manière à laisser servir un segment qui est entouré par le contour après la dilatation de morphologie comme première région d'intérêt.

4. Procédé selon l'une quelconque des revendications 1 à 3, dans lequel l'étape (204) d'estimation de la forme de hauteur de la surface de route dans la scène routière comprend :

une étape de sélection, sur la base des plusieurs points d'intérêt de surface de route, des points les plus bas, qui présentent une coordonné verticale minimum Y, qui présentent une même distance D et une même coordonnée horizontale X dans la carte de disparités originales pour qu'ils servent de points de surface de route candidats, puis de mise en oeuvre d'un ajustement par plan sur la base des points de surface de route candidats de manière à acquérir la forme de hauteur de la surface de route dans la scène routière ; ou

une étape de génération d'une image de disparités en V en mettant en oeuvre une projection des plusieurs points d'intérêt de surface de route puis en sélectionnant des points les plus bas, qui présentent une coordonné verticale minimum Y et qui présentent une même distance D dans l'image de disparités en V pour qu'ils servent de points de surface de route candidats puis de mise en oeuvre d'un ajustement par ligne droite sur la base des points de surface de route candidats de manière à acquérir la forme de hauteur de la surface de route dans la scène routière.

5. Procédé selon l'une quelconque des revendications 1 à 4, comprenant en outre :
une étape d'estimation d'une hauteur réelle d'un objet réel dans la scène routière sur la base de la forme de hauteur de la surface de route dans la scène routière, comprenant :

une étape, en considérant une distance D' en relation avec l'objet réel, d'obtention, sur la base de la forme de hauteur de la surface de route dans la scène routière, d'une hauteur de surface de route h(d) qui correspond à la distance D', où d représente une valeur de disparité qui correspond à la distance D' ; et
une étape d'obtention de la hauteur réelle de l'objet réel $h_s(D')$ conformément à la formule :

$$h_s(D') = (y - h(d))\frac{b}{d - v} \, ,$$

dans laquelle b représente une longueur de ligne de base d'une caméra à deux objectifs pour obtenir la carte de disparités originales ; v représente une valeur de décalage prédéterminée en relation avec la caméra à deux objectifs ; et y représente une coordonnée verticale d'un pixel qui présente la valeur de disparité d.

6. Système (104) configuré pour réaliser le procédé selon l'une quelconque des revendications 1 à 5.

# FIG.1

```
                    ┌─────────────────┐ 103
                    │  STORAGE PART   │
                    └─────────────────┘
                         │      ▲
                         ▼      │
┌──────────┐ 101  ┌──────────┐ 102  ┌──────────────┐ 104  ┌──────────┐ 105
│ TWO-LENS │ ──►  │ DECODER  │ ──►  │   DIGITAL    │ ──►  │ VEHICLE  │
│  CAMERA  │      │          │      │    SIGNAL    │      │ CONTROL  │
│          │      │          │      │  PROCESSING  │      │   PART   │
│          │      │          │      │     PART     │      │          │
└──────────┘      └──────────┘      └──────────────┘      └──────────┘
```

100

# FIG.2

200

```
┌─────────────────────────────┐
│   OBTAINING DISPARITY       │ 201
│   MAP OF ROAD SCENE         │
└─────────────────────────────┘
              │
              ▼
┌─────────────────────────────┐
│  DETECTING ROAD-SURFACE     │ 202
│  REGION OF INTEREST BASED   │
│  ON DISPARITY MAP           │
└─────────────────────────────┘
              │
              ▼
┌─────────────────────────────┐
│  DETERMINING ROAD-SURFACE   │
│  POINTS OF INTEREST BASED   │ 203
│  ON ROAD-SURFACE REGION     │
│  OF INTEREST                │
└─────────────────────────────┘
              │
              ▼
┌─────────────────────────────┐
│  ESTIMATING ROAD-SURFACE    │
│  HEIGHT SHAPE BASED ON      │ 204
│  ROAD-SURFACE POINTS        │
│  OF INTEREST                │
└─────────────────────────────┘
```

# FIG.3

202

| SELECTING UNDERPART DISPARITY MAP | 2021 |

↓

| PERFORMING BINARY IMAGE PROCESSING ON UNDERPART DISPARITY MAP SO AS TO ACQUIRE BINARY IMAGE | 2022 |

↓

| PERFORMING MORPHOLOGY EROSION ON BINARY IMAGE SO AS TO OBTAIN FIRST IMAGE | 2023 |

↓

| SETTING ONE OR MORE SEED POINTS AT PREDETERMINED PART IN FIRST IMAGE | 2024 |

↓

| CONDUCTING REGION GROWING BASED ON ONE OR MORE SEED POINTS SO AS TO OBTAIN SEGMENT | 2025 |

↓

| LETTING OBTAINED SEGMENT SERVE AS ROAD-SURFACE REGION OF INTEREST | 2026 |

## FIG.4A

## FIG.4B

## FIG.4C

## FIG.4D

## FIG.4E

SEED POINT

## FIG.4F

ROAD-SURFACE REGION
OF INTEREST (ROI)

# FIG.4G

(a1) DISPARITY MAP

(b1) SETTING SEED POINT

ROI-BASED DETECTION RESULT

(c1) ROAD-SURFACE REGION OF INTEREST (ROI)

(a2) DISPARITY MAP

(b2) SETTING SEED POINT

ROI-BASED DETECTION RESULT

(c2) ROAD-SURFACE REGION OF INTEREST (ROI)

EP 2 772 883 B1

# FIG.5

203

```
┌─────────────────────────────────┐
│ PERFORMING POST-PROCESSING ON   │
│ ROAD-SURFACE REGION OF INTEREST │  2031
│   SO AS TO OBTAIN FIRST REGION  │
│            OF INTEREST          │
└─────────────────────────────────┘
                 │
                 ▼
┌─────────────────────────────────┐
│   LETTING INTERSECTIONS BETWEEN │
│ DISPARITY MAP AND FIRST REGION OF│  2032
│  INTEREST SERVE AS ROAD-SURFACE │
│          POINTS OF INTEREST     │
└─────────────────────────────────┘
```

# FIG.6

(a) DISPARITY MAP

(b) ROAD-SURFACE ROI

(c) ROAD-SURFACE POI

(d) DISPARITY MAP

(e) OUTLINE OF ROAD-SURFACE ROI

(f) ROAD-SURFACE POI

(g) DISPARITY MAP

(h) SEGMENT SURROUNDED BY OUTLINE OF ROAD-SURFACE ROI

(i) ROAD-SURFACE POI

# FIG.7

(a) DISPARITY MAP

(b) ROAD-SURFACE POI

(c) POI-BASED
V-DISPARITY IMAGE

EP 2 772 883 B1

FIG.8A

## FIG.8B

(a) ORIGINAL DISPARITY MAP     (b) CONVENTIONAL METHOD     (c) PRESENT INVENTION -BASED METHOD

# FIG.9

EP 2 772 883 B1

POI

(a) ROAD-SURFACE POI

POI-BASED
V-DISPARITY IMAGE

(b) POI-BASED
V-DISPARITY IMAGE

THREE
ROAD-SURFACE
STRAIGHT LINES

(c) ESTIMATED
ROAD-SURFACE
STRAIGHT LINES

# FIG.10

(a) ROAD-SURFACE
STRAIGHT LINES

(b) ROAD-SURFACE POINTS

EP 2 772 883 B1

# FIG.11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090041337 A1

**Non-patent literature cited in the description**

- A Complete U-V-Disparity Study for Stereovision Based on 3D Driving Environment Analysis. **ZHENCHENG HU ; FRANCISCO LAMOSA ; KEI-ICHI UCHIMURA.** Proceedings of the 5th International Conference on 3-D Digital Imaging and Modeling. Kumamoto University, 13 June 2005

- Unified stereovision for ground, road, and obstacle detection. **LOMBARDI P et al.** Intelligent Vehicles Symposium, 2005. Proceedings. IEEE Las Vegas. IEEE, 06 June 2005, 783-788
- A real-time vehicle detection and tracking system in outdoor traffic scenes. **XIN LI et al.** Pattern Recognition, 2004, ICPR 2004, Proceedings of the 17th International Conference on Cambridge. IEEE, 23 August 2004, vol. 2, 761-764